# EUROPEAN PATENT SPECIFICATION

(11) **EP 3 021 327 B1**
(45) Date of publication and mention of the grant of the patent: **20.12.2017**
(21) Application number: 15000523.9
(22) Date of filing: 24.02.2015
(51) Int. Cl.: G21C 17/013, G21C 19/20, G21C 17/01, B25J 5/00, B25J 18/02

(54) **MANIPULATING INSPECTION DEVICE**
MANIPULATIONSINSPEKTIONSVORRICHTUNG
MANIPULATION DE DISPOSITIF D'INSPECTION

(30) Priority: 05.11.2014 CZ 20140752
(43) Date of publication of application: 18.05.2016
(73) Proprietor: Skoda JS a.s., 316 06 Plzen (CZ)
(72) Inventor: Rausch, Ivan, 323 00 Plzen (CZ); Kepka, Petr, 330 11 Tremosná (CZ); Proks, Martin, 334 41 Dobrany (CZ); Suchý, Jirí, 330 22 Zbuch (CZ)
(74) Representative: Pavlica, Tomas

(56) References cited:
- CN-A- 103 985 424
- GB-A- 1 390 998
- US-A- 3 780 571

## Description

### Field of Invention

During inspections of a shut-down nuclear reactor at a nuclear power plant with a pressurized water reactor, e.g. of a VVER 440, VVER 1000, MIR 1200, AP1000 type, a manipulating inspection device according to this invention serves for testing, measuring, inspecting and repairing inside a reactor pressure vessel being open from its top. In the course of such activities, the manipulating inspection device is temporarily seated on the pressure vessel and it is removed again after these operations have been completed.

### State of Art

Manipulating inspection devices used up to now, adapted for testing, measuring, inspecting and repairing inside a reactor pressure vessel located at a nuclear power unit and open from its top, comprise a bridge, a frame or a support carrying a fixed or telescopic mast. Where a fixed mast is used, there is a support with a supporting part for fastening heads adapted for testing, measuring, inspecting and repairing that travels along the mast. Where a telescopic mast is used, there are telescopic arms mounted at its bottom part and these are provided with supporting parts for fastening heads adapted for testing, measuring, inspecting and repairing. Depending on a concept selected, such solutions may be technologically demanding, demanding in terms of the period and area necessary for assembly, or possibly, such solutions may require a long time for the implementation of required activities, or may result in a great weigh of the manipulating inspection device.

An example of the state of art of manipulating inspection devices is a patent file No. CZ274603 according to which the manipulating inspection device comprises a manipulator bridge, a fixed mast, a support traveling along the fixed mast by means of a lifting mechanism consisting of two cable drums and a supporting part mounted on the support and serving for positioning the measuring, testing, inspecting, and repairing instruments. A disadvantage of this solution lies in a great weight of the entire manipulating inspection device and the volume of the transported material during transportation of the manipulating inspection device to the reactor, where the inspection is to be performed.
Another example of the state of art is a patent file No. GB 1 390 998, where the manipulating inspection device consists of a mast, supporting arms, several transverse supports for inspecting reactor pressure vessel nozzles and a pressure vessel circumferential weld. The mechanism for setting the arms within the mast enables, in determined places, assembly onto various reactor pressure vessel diameters. A disadvantage of this solution lies in the possibility of its assembly onto certain reactor pressure vessels types only and in the fact that it does not enable inspecting the reactor pressure bottom as it cannot reach there.
A document US 3,780,571 from April 22, 1971 discloses a reactor vessel inspection device that can be utilized to inspect the vessel routine maintenance. The inspection device comprises mounting means, first movable support means connectable to the mounting means and a telescopic mast to which a second movable support means are connected to which the inspection equipment is attached.

### Object of the invention

The manipulating inspection device according to this invention is adapted as an easily assembled and disassembled positioning device for manipulating individual modules that serve for the implementation of respective inspection operations during inspections of a reactor pressure vessel. These inspection operations are carried out inside the reactor pressure vessel, whereas these operations involve so-called non-destructive testing executed on the inner surface of reactor pressure vessels without a need for transmitting significant force effects.
The main advantage of the manipulating inspection device according to this invention lies in the fact that it is an easily and quickly assembled and easily controlled device that, moreover, takes into account the conditions in the respective workplace at a power unit, such as the size of penetrations or crane uplift. Further, thanks to the simplicity and great accessibility of its structure as well as appropriate choice of materials, the manipulating inspection device according to this invention enables its simple decontamination after the reactor pressure vessel inspection and facilitates its transportation to the place of inspection execution, e.g. using a standard truck.
The manipulating inspection device is adapted for conditions usual for a reactor hall during a reactor outage. The manipulating inspection device is advantageously provided with its own control room with evaluation equipment located in an independent mobile booth and thereby it is independent of the environment where the inspection is carried out.

The manipulating inspection device according to this invention comprises a main support and a mast connected to it, where this main support is adapted for repeated connection to a reactor pressure vessel, and in the center of which there is a pivotally arranged telescopic mast that passes through the main support, whereas its principle consists in the main support being provided with a turn table with an orifice in its center for the mast, where the circumference of this orifice for the mast is provided with a flange for dismountable connection with the telescopic mast and it is also provided with a drive adapted for turning the telescopic mast connected with the turn-table, whereas the telescopic mast is provided with a connecting part for the connection with the flange of the main support and, at its bottom part, it is provided with a transverse track with at least one sliding trolley adapted for fastening probes and with a distribution box for cable lines to the probes, whereas the transverse track with at least one sliding trolley is adapted for the movement of the sliding trolley in a radial direction with respect to the center of the main support with the telescopic mast. Thereby the movement of the sliding trolley with test probes is ensured and that is in cylindrical coordinates within the entire cavity of a reactor pressure vessel. The transverse track is, particularly advantageously, provided with two sliding trolleys.

According to one particularly advantageous embodiment of the manipulating inspection device, the main support, the mast as well as the transverse track are formed by welding metal sheets perforated for the purpose of lowering its weight.

According to its highly advantageous embodiment, the manipulating inspection device is provided with draw bars and a suspension enabling easy manipulating both the assembled manipulator and its mast part prior to its assembly.

The manipulating inspection device is adapted in such a way that its part that protrudes below the reactor pressure vessel main dividing plane, i.e. the telescopic mast with the transverse track, wiring unit box and cable lines, is advantageously adapted for operation in water. The part of the manipulating inspection device that remains above the level of the main dividing plane during inspections is advantageously modified for decontamination by wiping, in other words it does not have to comply with the requirements for operation in water.

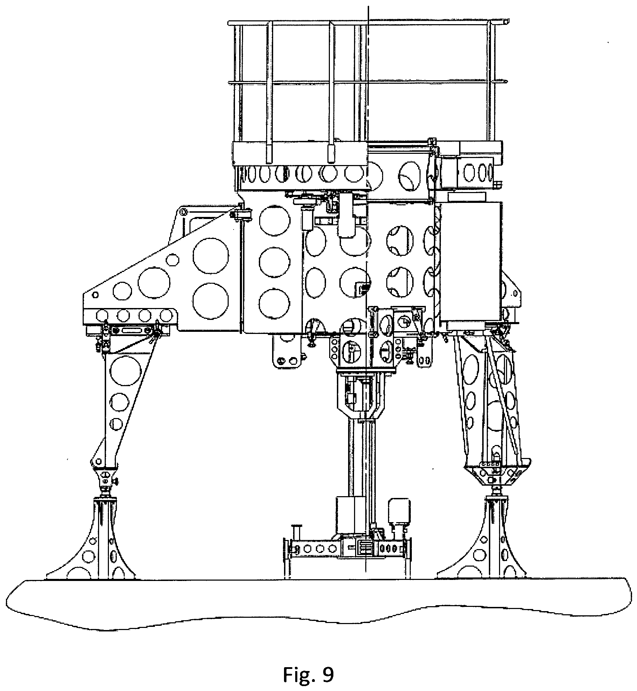

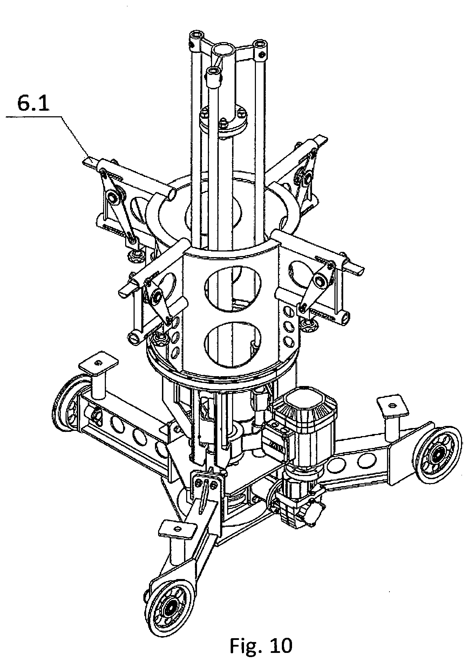

The advantages of the manipulating inspection device according to this invention are as follows:
- The manipulating inspection device is adapted as a modular inspection device for inspecting various types of reactor pressure vessels that enables attaching inspection probes and tools as needed for the inspection.
- The manipulating inspection device enables easy assembly and disassembly to individual main assemblies, i.e. the main support center, the leg, the telescopic mast, the transverse track and the draw bars. Therefore, it is possible to transport individual parts placed in special boxes providing their protection during transport.
- The connection of the above mentioned main components of the manipulating inspection device carried out in the reactor hall is merely mechanical and therefore very fast.
- There is a minimum need for a polar crane in the reactor hall during assembly. The crane is only needed for the assembly of the mast into the main support. Thereby the overall time of assembly of the manipulating inspection device is shortened.
- The manipulating inspection device uses its own control room with evaluation equipment located in a mobile booth and therefore it is not dependent on the environment within which the inspection is carried out.
- According to a particularly advantageous embodiment, the manipulating inspection device also includes transport fixtures simultaneously serving for the assembly of the entire device, especially for the transportation of the main support in the reactor hall. The fixtures are adapted with an emphasis put on easy servicing and trouble-free operation, as shown e.g. in Fig. 9 and 10.
- With another advantageous embodiment of the manipulating inspection device according to this invention, the position of probes in the reactor may be easily controlled and monitored as each of its drives is particularly advantageously provided with an encoder for spot position indication during turning and movement of individual parts.
- An advantageous embodiment of the manipulating inspection device according to this invention enables its easy servicing as drives and control parts may be easily mechanically disassembled and both inspected and repaired beside the device, i.e. outside the reactor hall.
- It is advantageous that with a particularly advantageous embodiment of the manipulating inspection device according to this invention, its structure is lightened thanks to the holes in the material of triangle-shaped beams of the telescopic mast as well as of individual parts of the main support, whereas the lightening holes are made in unloaded points of the structure. Thanks to the lightened structure, easy manipulating, assembly and transportation of the manipulating inspection device according to this invention is enabled.
- The materials used for the manipulating inspection device are suitable for contact with primary water, particularly the bottom part of the mast with the distribution box and the transverse track with sliding trolleys. The entire mechanical structure may be decontaminated by rinsing.
- An advantageous embodiment of the device according to this invention enables inspecting reactor pressure vessels of various diameters effectively and this is thanks to supporting legs with a sliding support which enables fastening of the manipulating inspection device main support onto reactor pressure vessels of various diameters. The equipment according to this invention further enables the use of various test probes, video cameras by means of their fastening onto sliding trolleys that are, particularly advantageously, independent from each other.
- With an advantageous embodiment of the manipulating inspection device, the safety aspect is solved in such a way that each trolley along the transverse track is actuated by an independent drive. For emergency cases, e.g. drive failure or blackout, the drive is provided with a disconnecting device by means of which the drive can be disconnected from the trolley and the trolley can be moved manually and thereby the removal of the telescopic mast from the reactor pressure vessel is ensured.
- The manipulating inspection device according to this invention enables performing inspections in a fully automated mode, in which the device can move and control itself automatically in accordance with various types of pre-determined tasks, whereas records from the video cameras and measurements are stored automatically.
- It is particularly advantageous that the device according to this invention enables performing inspections with at least two heads with probes simultaneously and that is thanks to two independent trolleys located on the transverse track. Therefore, an inspection may be carried out in the reactor pressure vessel in two different locations simultaneously, whereas the trolleys are advantageously adapted for connecting various test probes, video cameras, etc.
- Thanks to two independent sliding trolleys, more heads with test probes may fastened and prepared for testing at the same time; with the embodiment including two independent trolleys this amounts up to three heads with test probes and a video camera simultaneously. This enables performing several inspections at the same time without the need to stop the manipulating inspection device according to this invention and replace the test probes, which results in shortening the entire period of testing of the reactor pressure vessel inner surface.
- Another advantage of the manipulating inspection device according to this invention lies in the fact that it is only the telescopic mast with trolleys that revolves, which enables increasing the speed of revolving and thereby again shortening the period of the reactor pressure vessel inspection, and that is also thanks to the lightened structure of the device according to this invention as described here above.

### Brief Description of Drawings

An exemplary embodiment of the main components of the invention is described with references to figures showing:
Fig. 1a shows a view of the overall assembly of the manipulating inspection device according to a particularly advantageous embodiment,
Fig. 1b shows a view of the overall assembly of the manipulating inspection device according to Fig. 1a positioned on a reactor pressure vessel,
Fig. 2 shows a floor projection of the manipulating inspection device assembly according to Fig. 1a,
Fig. 3 shows a view of the center part of the manipulating inspection device main support according to fig. 1a,
Fig. 4 shows a view of the supporting leg of the manipulating inspection device according to Fig. 1a
Fig. 5 shows a view of the supporting leg according to Fig. 4 in its transport position,
Fig. 6 shows a view of the mast of the manipulating inspection device according to Fig. 1a
Fig. 7 shows a view of the transverse track of the manipulating inspection device according to Fig. 1a,
Fig. 8 shows a perspective view of the assembled main support of the manipulating inspection device according to Fig. 1a, consisting of a center part according to Fig. 3 and three supporting legs according to Fig. 4, whereas the main support is positioned on a lifting manipulator according to Fig. 10,
Fig. 9 shows a side view of the assembled main support according to Fig. 8 on the lifting manipulator according to Fig. 10, ready for the assembly of the mast and transverse track,
Fig. 10 shows a view of the main support lifting manipulator itself.

### Examples of embodiment

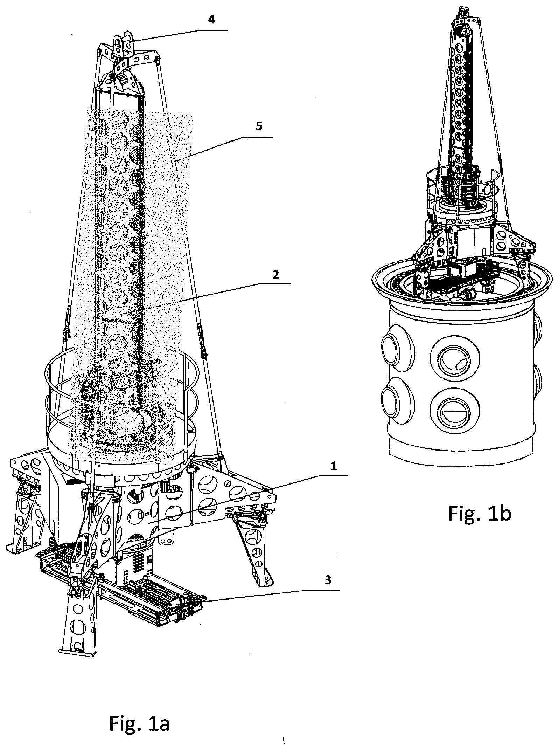

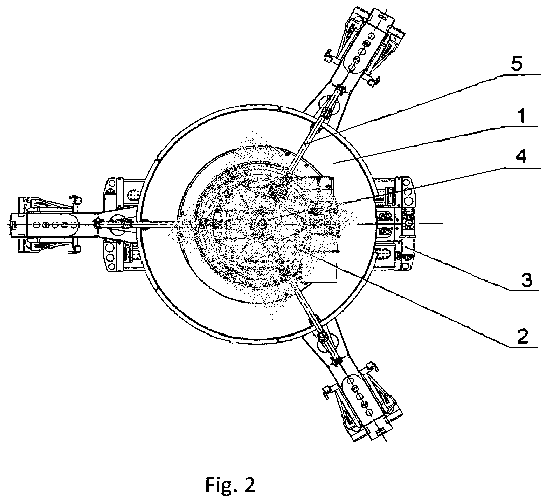

For better understanding of the invention principle, Fig. 1a and 2 show one of possible examples of the embodiment of the manipulating inspection device according to this invention. The manipulating inspection device shown in Fig. 1a and 2 consists of the main support 1, the telescopic mast 2, the transverse track 3, the suspension 4 and the draw bars 5. Particularly advantageously the manipulating inspection device according to this invention includes an independent manipulator 6, in particular enabling fast and comfortable assembly of the main support 1 as well as its subsequent connection with the telescopic mast 2 and the transverse track 3. Fig. 1b shows a view of the manipulator according to Fig. 1a, positioned on a reactor pressure vessel.

### Main support 1

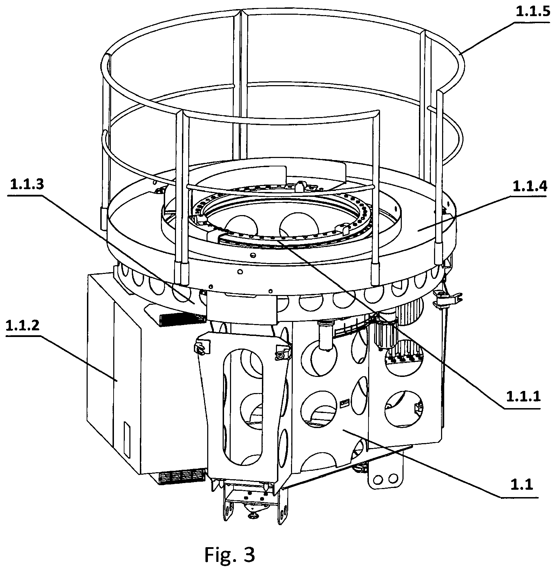

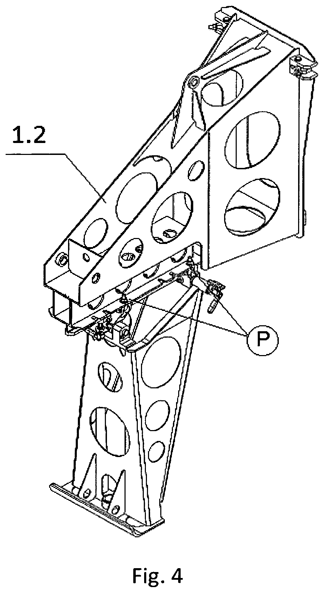

The main support 1 is adapted for its clamping onto the flange of an open reactor pressure vessel, see fig. 1a, and, substantially, it consists of a center part 1.1 that serves for guiding the telescopic mast 2, shown in detail in fig. 3, and three supporting legs 1.2, shown in detail in fig. 4, that ensure positioning of the entire manipulating inspection device onto the reactor pressure vessel. The center part 1.1 of the main support 1 is provided with a turn table 1.1.1 with an orifice for the telescopic mast 2, adapted for the connection with the telescopic mast as well as to enable turning this telescopic mast 2 against immovable parts of the main support1. With this exemplary embodiment, the center part 1.1 consists of a cylindrical weldment made of austenitic stainless steel provided with a main flange at its upper part for its connection with the turn table 1.1.1 to be described hereunder, and with holders of housing supports at its bottom part. Advantageously, there are three holders and these serve for supporting the lower part of the telescopic mast 2 to be also described hereunder. With this particularly advantageous solution, along the circumference of the center part 1.1 there are three extension pieces 1.1.6 with side flanges for the connection of three supporting legs 1.2 to the center part 1.1.

Moreover, the main support1 is provided with at least one distribution box 1.1.2 for wiring, evaluation equipment, a turn table actuating and measuring unit with the telescopic mast 2, and it is further provided with a cable chain round track and a walk-on platform 1.1.4 serving for the assembly of the telescopic mast 2. With this exemplary embodiment, the center part 1.1 has two distribution boxes 1.1.2 arranged between the extension pieces 1.1.6 with flanges for fastening supporting legs 1.2, whereas one distribution box serves for the drives of the manipulating inspection device and the other one serves both for the drive and position measurement of the turn-table. Again, this only represents an advantageous embodiment and arrangement, the amount of switchboards and their use may differ from the given example as needed or required.

The turn-table 1.1.1 consists of a circumferential bearing with a rotary support annulus and it is mounted onto the main flange of the center part 1.1. The turn-table 1.1.1 serves for fastening the telescopic column 2 and for ensuring the possibility of its turning against the main support 1. With this exemplary embodiment, the center part 1.1 is, at its upper part, further provided with the already mentioned round groove 1.1.3 of the cable chain and walk-on platform 1.1.4 made of austenitic steel and a handrail 1.1.5, advantageously and for weight reasons made of aluminum.

As obvious from Fig. 4, each supporting leg 1.2 with this embodiment consists of a fixed and a tilting part, the tilting part being adapted to lean against the reactor flange at a reactor pressure vessel main dividing plane. Supporting legs 1.2 are connected to side flanges of respective extension pieces 1.1.6 of the center part 1.1 using a complementary flange that forms part of the fixed part of the supporting leg 1.2. Both the fixed and the tilting part of the supporting leg 1.2 are formed as an austenitic stainless steel weldment. With the exemplary embodiment according to Fig. 4, the fixed part of each supporting leg is formed as a beam provided with a complementary flange adapted for dismountable connection with the respective side flange of the center part 1.1, and, at its upper surface, it is provided with a lug for fastening a respective draw bar 5 of the suspension 4 that serves for manipulating the assembled manipulating inspection device. With the exemplary embodiment according to Fig. 3, the side flange of the extension piece 1.1.6 is provided with latches ensuring detachable connection between the supporting leg 1.2 and the center part 1.1. Nevertheless, other detachable connection may be also applied. According to another advantageous embodiment, the connection between the supporting legs 1.2 and the center part 1.1 may be implemented, for instance, using studs and bolts or using another available method that will ensure a tight connection between the supporting legs 1.2 and the center part 1.1 of the main support 1 while enabling easy disassembly of these components. It is obvious that the supporting legs 1.2 may be connected with the center part 1.1 using various methods while maintaining the possibility of dismounting the supporting legs from the center part prior to transport and their re-mounting during the assembly of the main support, so that the connection presented in the respective figures shall only be understood as a possible and advantageous example of its embodiment. Both the suspension 4 and the draw bars 5 will be described here under.

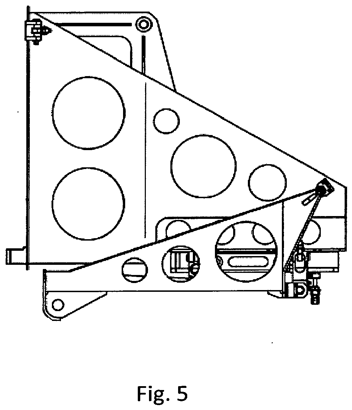

The tilting part of the supporting leg 1.2 is advantageously slidingly supported with respect to the fixed part, which ensures the possibility of mounting the main support 1 of the manipulating inspection device according to this invention onto reactor pressure vessels of various diameters. With this exemplary embodiment, the sliding support of the tilting part on the fixed part of the supporting leg 1.2 is implemented in such a way that the fixed part is provided at its bottom surface with suitable guiding means, e.g. with a rail, along which the tilting part can move and to which the tilting part may be fixed once a required reactor pressure diameter has been set. With this exemplary embodiment, the tilting part of the supporting leg consists of a tilting leg and a foot that is to lean against the reactor pressure vessel flange. Both these parts are made in this example of an austenitic stainless steel. The sliding support of the supporting leg titling part, or more precisely its tilting leg on the guiding of the fixed part may advantageously be done using four combined pulleys, by the use of which the tilting part slides along the guiding of the fixed part, whereas the tilting leg is connected with the fixed part by means of a rotary support enabling its tilting. The rotary support advantageously enables setting the tilting part in two positions. The first position is a transport one, possibly used also for the assembly of the main support, where the tilting part is tilted to the bottom of the fixed part. The second position is an operating one, where the tilting part is tilted by approx. 90° downwards. The rotary support is advantageously implemented using two studs with couplers that ensure locking the tilting part in either position. The transport position of the supporting leg tilting part is shown in Fig. 5.

Fig. 4 shows the sliding support of the tilting part on the fixed part that enables setting the tilting leg position to three different pitches for three different types of reactor pressure vessels, whereas fixing the tilting leg in individual positions is carried out by means of a stud with a coupler and locking the selected position is carried out using four bolts P. Again, this represents an advantageous embodiment that illustrates the flexibility of the manipulating inspection device according to this invention. The sliding support is only an advantageous one and, of course, it is possible to produce a manipulating inspection device to be connected with a reactor pressure vessel of one diameter only, as well as with a different amount of diameters than used within the above exemplary embodiment.

Another part of the manipulating inspection device according to this invention and Fig. 1 is the telescopic mast 2 adapted to carry the transverse track 3 on which sliding trolleys for inspection modules are arranged. As obvious, the telescopic mast 2 ensures the movement of the transverse track 3 with sliding trolleys along the height of the reactor pressure vessel, whereas the transverse track 3 ensures the movement of the trolleys in the radial direction of a reactor pressure vessel. Exemplary embodiments of the telescopic mast and transverse track will be described in detail hereinafter.

### Telescopic mast 2

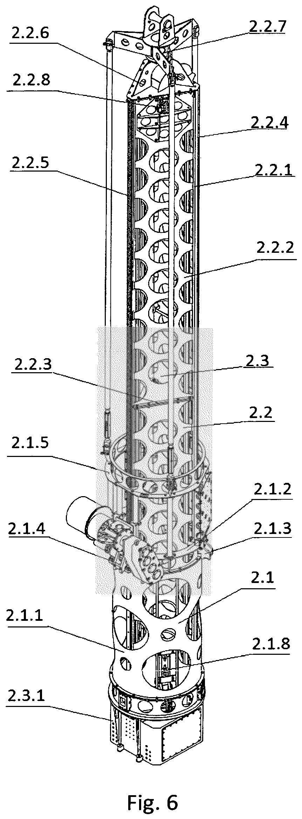

An exemplary embodiment of the only telescopic mast 2, not being mounted on the main support 1, is shown in Fig. 6. With this exemplary embodiment, the telescopic mast 2 consist of mast guiding means 2.1 adapted for the connection with the main support turn table 1.1.1 (see Fig. 3), and the mast itself being, in this case, a telescopic one and comprising at least two parts, an outer mast 2.2 and an inner mast 2.3, arranged telescopically, slidingly, against each other. Notwithstanding, as obvious, this is only an advantageous embodiment and the amount of telescopically moving parts of the mast itself, i.e. the amount of inner masts of respective dimensions telescopically arranged inside, may possibly differ in other embodiments of the manipulating inspection device, i.e. three, four or even more inner masts may be telescopically arranged inside the outer one.

Both the outer mast 2.2 and the inner mast 2.3 are, with the embodiment shown in fig. 6, particularly advantageously of a triangular profile and, at their three vertices, the masts are provided with guiding rails arranged so as to serve for guiding both parts of the telescopic mast against each other. The guiding of the outer mast 2.2 along the mast guiding means 2.1 as well as the guiding of the inner mast 2.3 against the outer mast 2.2 is carried out by means of shaped pulleys, as described hereunder, ensuring sufficient stiffness of the manipulating inspection device according to this invention even at a full extension of the mast telescopic parts. A detailed description of the exemplary embodiment of the mast telescopic parts will be given hereunder.

In the upper part of the telescopic mast 2, the outer mast 2.2 together with the inner mast 2.3 is supported in the mast guiding means 2.1 that is adapted for the connection with the turn table 1.1.1 of the main support 1. The mast guiding means 2.1 will also be described in detail hereunder. Nevertheless, the mast guiding means advantageously includes actuating means in order to allow inserting of the telescopic mast 2 into the reactor pressure vessel as well as for its ejection from the vessel. The extension and retraction of the telescopic mast 2 itself is advantageously carried out using at least one toothed rack arranged along at least one guiding rail of the outer mast 2.2. and using pulleys with a gall's chain arranged between the outer mast 2.2 and the inner mast 2.3. In the lower part of the telescopic mast 2, i.e. on the transverse track 3, there is a distribution box advantageously arranged, into which cables from drives and sensors of individual sliding trolleys or possibly probes, etc. may be connected. With this exemplary embodiment, in the upper part of the mast guiding means 2.1 there are lugs for draw bars 5 adapted for connecting the telescopic mast 2 with the suspension 4, which enables easy manipulating the telescopic mast 2 itself during its assembly onto and disassembly from the main support 1.

With the exemplary embodiment according to fig. 6, the mast guiding means 2.1 comprises a cylindrical shroud 2.1.1, an austenitic stainless steel weldment, with flanges at both its ends. There is a guiding crown connected to upper flange 2.1.2 where there are supports that serve for positioning the telescopic column 2 onto the turn table 1.1.1 of the main support 1 according to Fig. 3. In the supports, there are shaped pulleys 2.1.3 and a pinion 2.1.4. The pinion is placed in bearing housings and it ensures the movement of the telescopic mast toothed rack. Above the guiding crown 2.1.2, there is an upper crown 2.1.5 fastened by the use of three struts. The upper crown is again an austenitic stainless steel weldment, on which there are lugs for the connection of the draw bars 5 enabling easy manipulating of the telescopic mast during its mounting onto the main support. Between the guiding crown 2.1.2 and the upper crown, there is a drive of the telescopic mast. The lower flange of the mast guiding means shroud 2.1.1 is connected with a lower crown which is again an austenitic stainless steel welded structure. Its lower part forms a round supporting rail and carries two shaped and one toothed pulley. The shaped pulleys, the pinion and the toothed pulley supported in the guiding crown and in the lower crown serve for guiding the outer mast part of the main support.

The outer mast 2.2 shown in Fig. 6 is welded of three beams 2.2.1 of a rectangular profile, connected by the use of metal sheets 2.2.2 forming a triangle on the cross section through the outer mast. Nevertheless, a different profile of beams may be used, as the rectangular one is only an advantageous profile. Also, a different shape of the outer mast cross section may be created. Fig. 6 shows the outer mast 2.2 advantageously consisting, for technological reasons, of two parts of the same length provided with flanges 2.2.3 and connected together using bolts. In the beams 2.2.1 of the lower part of the outer mast 2.2, there are housing welded in for imbedding the shaped pulleys of the inner mast part guiding. There are three shaped guiding tracks fastened, i.e. by means of screwing, onto the outer longitudinal edges of the outer mast 2.2. In this exemplary embodiment, two guiding tracks are formed by a guiding with a groove 2.2.4 and one track is formed by a guiding with toothing 2.2.5 that ensures the ejection of the outer mast 2.2 (together with the inner mast 2.3) from the mast guiding means 2.1. In the upper part of the telescopic mast 2 there is a mast holder 2.2.6, an austenitic stainless steel welded structure provided with a cable chain guiding and a stud 2.2.7 for guiding the suspension 4. In the upper and lower part of the telescopic mast there are housings 2.2.8 of chain wheels for the movement chain of the inner mast part. All components of the mast are made of austenitic and martensitic stainless steel.

The inner mast 2.3 shown in fig. 6 is, similarly to the outer mast 2.2, welded of three beams connected using sheet metal to form triangular profile. Moreover, for technological reasons, the outer mast part is divided into two parts of the same length, connected using bolts via flanges, which is not, however, obvious from the figure. The design of the inner mast part 2.3 enables its full insertion into the outer mast part 2.2. There are shaped guiding tracks mounted at the outer side of the beams. At the lower end of the mast there is a flange for fastening the distribution box 2.3.1, at its upper end there is a cable chain holder. Again, all components are made of austenitic and martensitic stainless steel.

### Transverse track 3

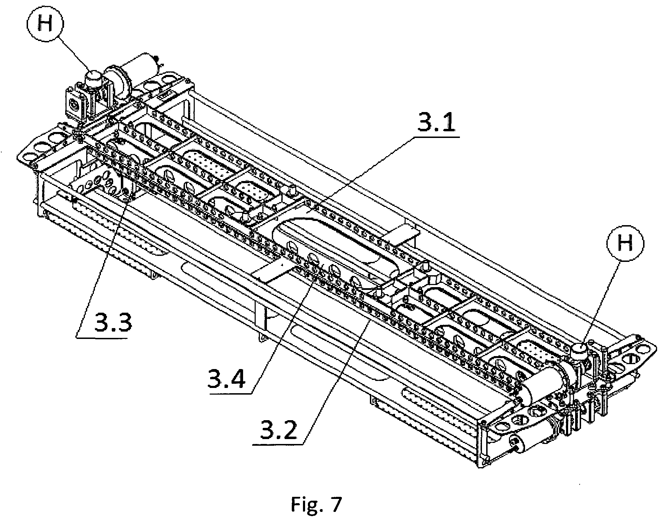

The transverse 3 track shown in Fig. 7 ensures the movement of inspection modules in the radial direction with respect to the reactor pressure vessel. For this reason and with this exemplary embodiment, the transverse track is provided with two independent tracks with sliding trolleys. The base of the transverse track 3 is a frame 3.1, advantageously formed by a weldment of an appropriate shape. In its upper part, this weldment is provided with fixtures for connecting studs for the connection of the telescopic mast 2. In the lower part of the frame 3.1 there are two independent tracks 3.2 with sliding trolleys 3.3. The tracks 3.2 with sliding trolleys 3.3 consist for instance of two rails mounted onto a central flange 3.4 mounted on the frame 3.1. On these rails, there are two sliding trolleys with guiding pulleys connected to respective drives that are controlled and supplied by the cables from the distribution box. In their lower parts, the trolleys are provided with flanges for fastening operating modules. The trolleys are actuated (independently of each other) using gall's chains by means of two sets of track drives mounted on the frame in the places of track rail ends. A set of drives advantageously comprises two main parts - a drive supporting plate and a wheel supporting plate.

### Suspension 4

The manipulating inspection device according to this invention is particularly advantageously provided with a suspension 4 that serves for manipulating of the entire manipulating inspection device or alternatively during assembly of the manipulating inspection device for manipulating with the telescopic mast 2 during its assembly to the main support 1. The suspension 4 advantageously comprises a three-armed beam with a stud adapted for easy running-in of the crane hook. At the ends of individual arms there are lugs for fastening three draw bars 5, as described hereunder. The center part of beams is on its bottom surface provided with a seating flange to guide the mast holder. Fixing the mast holder into the suspension as well as the use of draw bars 5 advantageously enables easy manipulating during assembly and disassembly of the mast 2 onto the main support 1. The suspension is made of austenitic and martensitic stainless steel. The draw bars 5 of the manipulating inspection device are advantageously adapted as three length-adjustable draw bars, where each draw bar consists of a mast part and a main support part and these parts are mutually connectible. During an assembly of the manipulating inspection device and manipulating with the telescopic mast itself, the suspension 4 and this telescopic mast 2 are only connected by means of the mast parts of the draw bars. As already described here above, during manipulating with the entire manipulating inspection device, the suspension 4 and supporting legs of the main support 1.2 are connected by the interconnected mast and main support parts of draw bars 5. The draw bars are made of austenitic and martensitic stainless steel.

### Lifting manipulator 6

For the purpose of easy assembly of the main support 1, the center part 1.1 of the main support 1 is advantageously provided with own lifting manipulator 6 that is adapted as an independent unit, whereas it is adapted for direct connection with the center part 1.1 and for manipulating the main support 1 of the manipulating inspection device according to this invention. The lifting manipulator 6 is provided with a telescopic part 6.1 with supporting surfaces adapted to enable safe manipulating the main support. The lifting manipulator is an autonomous device comprising own motor with a gear unit connected to a motion screw that ensures lifting the telescopic part 6.1. For lifting the main support 1, the telescopic part 6.1 is advantageously provided with a guiding implemented by means of three hollow rods fastened in six bearing housings. Thanks to its support on an axial turn bearing, the telescopic part may also turn around its vertical axis while being ejected. The entire lifting manipulator 6 of the main support 1 advantageously moves on three directible wheels, which enables the movement of the manipulator in an arbitrary direction.

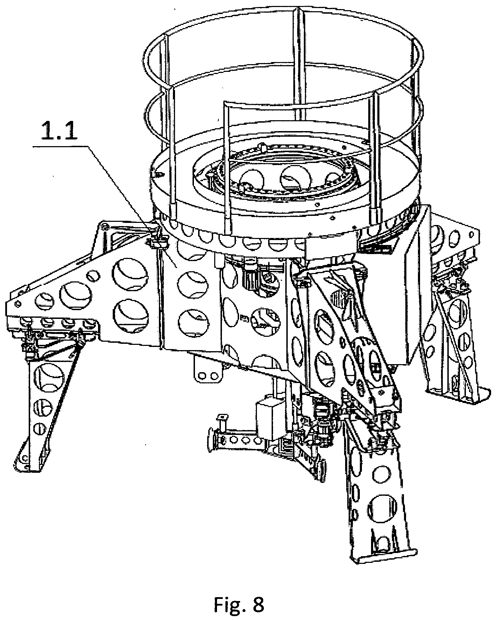

Using this manipulator 6, the main support 1 (with its supporting legs dismounted) may be advantageously transported in a container too. At the same time, the manipulator 6 serves for facilitating the assembly of the manipulating inspection device after it has been brought to the place of inspection implementation. The manipulator 6 enables lifting and turning the center part 1.1 of the main support 1 to such a height that the supporting legs 1.2 can be mounted onto it, see Fig. 8., and it further enables lifting the main support 1 for the assembly of the mast 2 and the transverse track 3, see Fig. 9.

### Industrial applicability

The solution proposed may practically be used for inner inspections of nuclear reactor pressure vessels.

### List of reference figures

1. Main support
   1.1. Main support center part
      1.1.1. Turn table
      1.1.2. Distribution box
      1.1.3. Cable chain round groove
      1.1.4. Walk-on platform
      1.1.5. Handrail
   1.2. Supporting leg
2. Mast
   2.1. Mast guiding means
      2.1.1. Cylindrical weldment with flanges
      2.1.2. Guiding crown
      2.1.3. Shaped pulleys
      2.1.4. Pinion
      2.1.5. Upper crown
   2.2. Outer mast
      2.2.1. Beam
      2.2.2. Metal sheet
      2.2.3. Flange
      2.2.4. Guiding track
      2.2.5. Guiding track with toothing
      2.2.6. Mast holder
      2.2.7. Stud
      2.2.8. Chain wheel imbedding
   2.3. Inner mast
3. Transverse track
4. Suspension
5. Draw bars
6. Lifting manipulator
   6.1. Telescopic parts

## Claims

1. A manipulating inspection device comprising a main support (1), to which a telescopic mast (2) is connected, whereas the main support (1) is adapted for repeated connection with a reactor pressure vessel, wherein the main support (1) comprises a center part (1.1) and at least three supporting legs (1.2) connectible to it, the supporting legs (1.2) being arranged substantially evenly around the circumference of the center part (1.1) and adapted for repeatable connection with a reactor pressure vessel, **characterized in that** the center part (1.1) of the main support (1) is provided with a turn-table (1.1.1) having an orifice in its center as well as with a drive for turning the telescopic mast (2), whereas this turn-table (1.1.1) is provided with a flange in order to provide a repeatable connection with the telescopic mast (2), while the telescopic mast (2) comprises mast guiding means (2.1), an outer mast (2.2) and an inner mast (2.3) telescopically arranged inside it, adapted for moving against each other, the mast guiding means (2.1) being provided with a connecting element for a repeatable connection with the flange of the main support (1), whereas the inner mast (2.3) is provided with a transverse track (3) at its bottom having at least one sliding trolley adapted for fastening probes and with a distribution box for cabling to the probes, the transverse track (3) being arranged for a movement of the sliding trolley along it in a radial direction from the center of the main support (1) with the telescopic mast (2).

2. A manipulating inspection device according to claim 1, **characterized in that** the transverse track (3) is provided with two sliding trolleys arranged independently of each other.

3. A manipulating inspection device according to claim 1 or 2, **characterized in that** both the outer mast (2.2) and the inner mast (2.3) are of a triangular cross section with three vertices running along the length of the mast thus forming three longitudinal edges of the triangle, whereas the inner mast is telescopically supported in the outer mast (2.3), and both the outer mast (2.2) and the inner mast (2.3) are provided with three guiding tracks located along said longitudinal edges, at least one of the tracks on each mast being a driving one in order to provide the ejection of the masts from the mast guiding means (2.1) as well movement of the masts against each other.

4. A manipulating inspection device according to any claim 1 to 3, **characterized in that** the center part (1.1) of the main support (1.) is provided with at least three projections (1.1.6) having side flanges, and **in that** the supporting legs (1.2) comprise each a fixed part and a tilting part, wherein the fixed part is formed as a beam provided with a complementary flange for the connection with a side flange of the projection (1.1.6).

5. A manipulating inspection device according to claim 4, **characterized in that** the tilting part is slidingly supported on the fixed part in order to enable fastening of the main support (1) onto reactor pressure vessels of various diameters.

6. A manipulating inspection device according to claim 4 or 5, **characterized in that** the tilting part of the supporting leg (1.2) is pivotally connected to its fixed part, whereas this rotary connection is adapted for locking the tilting part in the working and transport position.

7. A manipulating inspection device according to any claim 1 to 6, **characterized in that** the main support (1), the telescopic mast (2), the transverse track (3) as well as the sliding trolley are made of welded sheet metal of a respective length, provided with holes for the purpose of their lightening.

8. A manipulating inspection device according to claim 1 to 5, **characterized in that** at its end being connected to the transverse track (3) and provided with at least one sliding trolley, the telescopic mast (2) is also provided with an electric/signal distribution box for a connection of cables from the sliding trolley drives as well as from sensors and/or probes arranged on the trolleys, the distribution box being watertight for its operation in water.

9. A manipulating inspection device according to any claim 1 to 8, **characterized in that** it comprises a lifting manipulator (6) of the main support (1).

10. A manipulating inspection device according to claim 8, **characterized in that** it is further provided with a control unit with evaluation equipment connected to the drives of the telescopic mast and sliding trolleys as well as to the sensors and/or the probes on the trolleys.

## Patentansprüche

1. Manipulations-Inspektionsvorrichtung, die eine Hauptstütze (1) umfasst, mit der ein Teleskopmast (2) verbunden ist, wobei die Hauptstütze (1) für ein wiederholtes Verbinden mit einem Reaktordruckgefäß ausgelegt ist, wobei die Hauptstütze (1) einen Mittelteil (1.1) und mindestens drei damit verbindbare Stützbeine (1.2) umfasst, wobei die Stützbeine (1.2) im Wesentlichen gleichmäßig um den Umfang des Mittelteils (1.1) angeordnet sind und für ein wiederholtes Verbinden mit einem Reaktordruckgefäß ausgelegt sind, **dadurch gekennzeichnet, dass** der Mittelteil (1.1) der Hauptstütze (1) mit einem Drehtisch (1.1.1) mit einer Öffnung in seiner Mitte sowie mit einem Antrieb zum Drehen des Teleskopmasts (2) versehen ist, wobei dieser Drehtisch (1.1.1) mit einem Flansch versehen ist, um für ein wiederholbares Verbinden mit dem Teleskopmast (2) zu sorgen, während der Teleskopmast (2) Mastführungsmittel (2.1), einen äußeren Mast (2.2) und einen teleskopisch darin angeordneten inneren Mast (2.3) umfasst, die dazu ausgelegt sind, sich gegeneinander zu bewegen, wobei das Mastführungsmittel (2.1) mit einem Verbindungselement für ein wiederholbares Verbinden mit dem Flansch der Hauptstütze (1) versehen ist, wobei der Innenmast (2.3) mit einer Querschiene (3) an seiner Unterseite, die mindestens eine Gleitaufhängung aufweist, die zum Befestigen von Sonden ausgelegt ist, und mit einem Verteilerkasten für die Verkabelung mit den Sonden versehen ist, wobei die Querschiene (3) für eine Bewegung der Gleitaufhängung entlang der Schiene in einer radialen Richtung von der Mitte der Hauptstütze (1) mit dem Teleskopmast (2) eingerichtet ist.

2. Manipulations-Inspektionsvorrichtung nach Anspruch 1, **dadurch gekennzeichnet, dass** die Querschiene (3) mit zwei Gleitaufhängungen versehen ist, die unabhängig voneinander angeordnet sind.

3. Manipulations-Inspektionsvorrichtung nach Anspruch 1 oder 2, **dadurch gekennzeichnet, dass** sowohl der äußere Mast (2.2) als auch der innere Mast (2.3) einen dreieckigen Querschnitt mit drei Scheiteln, die entlang der Länge des Mastes verlaufen und so drei Längskanten des Dreiecks bilden, aufweist, wobei der innere Mast teleskopisch in dem äußeren Mast (2.3) abgestützt ist, und sowohl der äußere Mast (2.2) als auch der innere Mast (2.3) mit drei Führungsschienen versehen ist, die sich entlang der Längskanten erstrecken, wobei mindestens eine der Schienen an jedem Mast eine Antriebsschiene ist, um für das Auswerfen der Masten aus dem Mastführungsmittel (2.1) sowie für die Bewegung der Masten in Bezug zueinander zu sorgen.

4. Manipulations-Inspektionsvorrichtung nach einem der Ansprüche 1 bis 3, **dadurch gekennzeichnet, dass** der Mittelteil (1.1) der Hauptstütze (1.) mit mindestens drei Vorsprüngen (1.1.6) versehen ist, die Seitenflansche aufweisen, und dass die Stützbeine (1.2) jeweils einen festen Abschnitt und einen kippbaren Abschnitt umfassen, wobei der feste Abschnitt als Träger gebildet ist, der mit einem komplementären Flansch für die Verbindung mit einem Seitenflansch des Vorsprungs (1.1.6) versehen ist.

5. Manipulations-Inspektionsvorrichtung nach Anspruch 4, **dadurch gekennzeichnet, dass** der kippbare Abschnitt gleitend auf dem festen Abschnitt abgestützt ist, um das Befestigen der Hauptstütze (1) an Reaktordruckgefäßen mit unterschiedlichen Durchmessern zu ermöglichen.

6. Manipulations-Inspektionsvorrichtung nach Anspruch 4 oder 5, **dadurch gekennzeichnet, dass** der kippbare Abschnitt des Stützbeins (1.2) schwenkbar mit seinem festen Abschnitt verbunden ist, wobei diese Drehverbindung zum Arretieren des kippbaren Abschnitts in der Arbeits- und der Transportposition ausgelegt ist.

7. Manipulations-Inspektionsvorrichtung nach einem der Ansprüche 1 bis 6, **dadurch gekennzeichnet, dass** die Hauptstütze (1), der Teleskopmast (2), die Querschiene (3) sowie die Gleitaufhängung aus geschweißtem Blech mit einer entsprechenden Länge hergestellt sind und zur Gewichtsverringerung mit Löchern versehen sind.

8. Manipulations-Inspektionsvorrichtung nach Anspruch 1 bis 5, **dadurch gekennzeichnet, dass** sie an ihrem Ende mit der Querschiene (3) verbunden ist und mit mindestens einer Gleitaufhängung versehen ist, wobei der Teleskopmast (2) auch mit einem Strom/Signalverteilerkasten für einen Anschluss der Kabel von den Gleitaufhängungsantrieben sowie von Sensoren und/oder Sonden, die auf den Aufhängungen angeordnet sind, versehen ist, wobei der Verteilerkasten für seinen Betrieb in Wasser wasserdicht ist.

9. Manipulations-Inspektionsvorrichtung nach einem der Ansprüche 1 bis 8, **dadurch gekennzeichnet, dass** sie einen Hebemanipulator (6) der Hauptstütze (1) umfasst.

10. Manipulations-Inspektionsvorrichtung nach Anspruch 8, **dadurch gekennzeichnet, dass** sie ferner mit einer Steuerungseinheit mit Auswerteausrüstung versehen ist, die an die Antriebe des Teleskopmastes und der Gleitaufhängungen sowie die Sensoren und/oder die Sonden an den Aufhängungen angeschlossen ist.

## Revendications

1. Dispositif d'inspection à manipulation comprenant un support principal (1), auquel un mât télescopique (2) est relié, tandis que le support principal (1) est adapté pour une liaison répétée à une cuve sous pression de réacteur, le support principal (1) comprenant une partie centrale (1.1) et au moins trois pieds de support (1.2) aptes à être reliés à celle-ci, les pieds de support (1.2) étant disposés de manière sensiblement régulière autour de la circonférence de la partie centrale (1.1) et adaptés pour une liaison répétable à une cuve sous pression de réacteur, **caractérisé par le fait que** la partie centrale (1.1) du support principal (1) comporte une plaque tournante (1.1.1) ayant un orifice en son centre, ainsi qu'un entraînement pour faire tourner le mât télescopique (2), tandis que ladite plaque tournante (1.1.1) comporte une bride afin de permettre une liaison répétable au mât télescopique (2), tandis que le mât télescopique (2) comprend des moyens de guidage de mât (2.1), un mât externe (2.2) et un mât interne (2.3) disposés télescopiquement à l'intérieur de celui-ci, adaptés pour se déplacer l'un contre l'autre, les moyens de guidage de mât (2.1) comportant un élément de liaison pour une liaison répétable à la bride du support principal (1), tandis que le mât interne (2.3) comporte un rail transversal (3) au niveau de sa partie inférieure, ayant au moins un chariot coulissant adapté pour fixer des sondes, et une boîte de distribution pour le câblage des sondes, le rail transversal (3) étant agencé pour un mouvement du chariot coulissant le long de celui-ci dans une direction radiale à partir du centre du support principal (1) avec le mât télescopique (2).

2. Dispositif d'inspection à manipulation selon la revendication 1, **caractérisé par le fait que** le rail transversal (3) comporte deux chariots coulissants disposés indépendamment l'un de l'autre.

3. Dispositif d'inspection à manipulation selon la revendication 1 ou 2, **caractérisé par le fait qu'**à la fois le mât externe (2.2) et le mât interne (2.3) sont de section transversale triangulaire avec trois sommets s'étendant le long de la longueur du mât formant ainsi trois bords longitudinaux du triangle, tandis que le mât interne est supporté télescopiquement dans le mât externe (2.3), et à la fois le mât externe (2.2) et le mât interne (2.3) comportent trois rails de guidage situés le long desdits bords longitudinaux, au moins un des rails sur chaque mât étant un rail d'entraînement afin de permettre l'éjection des mâts à partir des moyens de guidage de mât (2.1) ainsi qu'un mouvement des mâts l'un contre l'autre.

4. Dispositif d'inspection de manipulation selon l'une quelconque des revendications 1 à 3, **caractérisé par le fait que** la partie centrale (1.1) du support principal (1) comporte au moins trois saillies (1.1.6) ayant des brides latérales, et **par le fait que** les pieds de support (1.2) comprennent chacun une partie fixe et une partie d'inclinaison, la partie fixe étant sous la forme d'une poutre munie d'une bride complémentaire pour la liaison à une bride latérale de la saillie (1.1.6).

5. Dispositif d'inspection à manipulation selon la revendication 4, **caractérisé par le fait que** la partie d'inclinaison est supportée de manière coulissante sur la partie fixe afin de permettre la fixation du support principal (1) sur des cuves sous pression de réacteur de divers diamètres.

6. Dispositif d'inspection à manipulation selon la revendication 4 ou 5, **caractérisé par le fait que** la partie d'inclinaison du pied de support (1.2) est reliée de manière pivotante à sa partie fixe, tandis que la liaison rotative est adaptée pour verrouiller la partie d'inclinaison dans la position de travail et de transport.

7. Dispositif d'inspection à manipulation selon l'une quelconque des revendications 1 à 6, **caractérisé par le fait que** le support principal (1), le mât télescopique (2), le rail transversal (3), ainsi que le chariot coulissant, sont faits de tôle soudée d'une longueur respective, comportant des trous à des fins d'allègement.

8. Dispositif d'inspection à manipulation selon les revendications 1 à 5, **caractérisé par le fait qu'**au niveau de son extrémité reliée au rail transversal (3) et comportant au moins un chariot coulissant, le mât télescopique (2) comporte également une boîte de distribution électrique/de signal pour un raccordement de câbles à partir des entraînements de chariot coulissant ainsi qu'à partir de capteurs et/ou sondes disposés sur les chariots, la boîte de distribution étant étanche à l'eau pour son fonctionnement dans l'eau.

9. Dispositif d'inspection à manipulation selon l'une quelconque des revendications 1 à 8, **caractérisé par le fait qu'**il comprend un manipulateur de levage (6) du support principal (1).

10. Dispositif d'inspection à manipulation selon la revendication 8, **caractérisé par le fait qu'**il comporte en outre une unité de commande avec équipement d'évaluation relié aux entraînements du mât télescopique et des chariots coulissants ainsi qu'aux capteurs et/ou sondes sur les chariots.
